(19) Europäisches Patentamt
European Patent Office
Office européen des brevets

(11) **EP 3 443 809 B1**

## (12) EUROPEAN PATENT SPECIFICATION

(45) Date of publication and mention
of the grant of the patent:
**27.11.2019 Bulletin 2019/48**

(21) Application number: **17726147.6**

(22) Date of filing: **10.04.2017**

(51) Int Cl.:
**H05B 1/02** *(2006.01)*    **G05D 23/24** *(2006.01)*

(86) International application number:
**PCT/IB2017/052058**

(87) International publication number:
**WO 2017/178952 (19.10.2017 Gazette 2017/42)**

(54) **AN INSTANTANEOUS HEATING DEVICE FOR SOLID, LIQUID, GAS AND VAPORS**

VORRICHTUNG ZUR SOFORTIGEN ERWÄRMUNG VON FESTSTOFFEN, FLÜSSIGKEITEN, GASEN UND DÄMPFEN

DISPOSITIF DE CHAUFFAGE INSTANTANÉ POUR SOLIDES, LIQUIDES, GAZ ET VAPEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2016 IT UA20162518**

(43) Date of publication of application:
**20.02.2019 Bulletin 2019/08**

(73) Proprietor: **REDOX S.R.L.**
**42124 Reggio Emilia (IT)**

(72) Inventors:
• **BONI, Angelo**
**42124 Reggio Emilia (IT)**
• **MAZZALI, Marco**
**42020 Rio Saliceto (Reggio Emilia) (IT)**

(74) Representative: **Casadei, Giovanni**
**Bugnion S.p.A.**
**Via Vellani Marchi, 20**
**41124 Modena (IT)**

(56) References cited:
**JP-A- 2002 215 246    US-A- 5 706 389**
**US-A1- 2009 045 187**

Remarks:
The file contains technical information submitted after the application was filed and not included in this specification

## Description

The present invention relates to an instantaneous heating device for solids, liquids, gases and vapors.

The energy saving in every machine, household appliance, transport system or dwelling, is of the greatest importance as it reduces the working costs and the pollution produced by energy sources. In particular in all applications where heating an element, whether liquid, solid, gas or vapor, is actuated discontinuously, there is a great waste of energy since before heating the element it is necessary to bring the heating system to temperature. Said heating system generally has a thermal mass that is substantially greater than the thermal mass of the element to be heated. In many cases the heating time is too long and it is necessary to continuously maintain the heating element at temperature, even though the element to be heated is not present for very long times.

The significant thermal mass of the heater is necessary for maintaining the temperature constant upon a variance in the expected working conditions; the heater is in fact usually provided with a temperature sensor and a control system of the heating power. During the heating step the power applied is at a maximum, then, on reaching the working temperature the heater maintains the required temperature by switching the heating element on and off with a useful cycle for example of 10%; when the element to be heated enters into contact with the heater, thermal energy is absorbed, passing from the heater to the element to be heated. The heater therefore tends to cool and the temperature control system sends more power to the heating system. In this regime a temperature transient occurs, with even considerable leaps between what is detected by the control system and how much is transferred to the element to be heated.

These transients are in general absorbed by the relevant thermal mass of the heater (a practical rule is that with a thermal mass of 20 times greater than the thermal mass of the element to be heated, the transient is contained within a few percentage points of the requested heating temperature).

By way of non-limiting example, we mention the sealing systems of cardboard and/or plastic trays for foods, used in supermarkets to close packs of perishable foods.

Said machines are made up of a lower base, comprising adjustable tray holders and an upper heating plate, with a typical power of 1KW and a metal mass (typically aluminium) of at least 1 Kg. The element to be heated is the border of said trays for foods, which will be sealed with a film of plastic material; the weight of the part to be heated is about 5 grams. The sealing temperature is typically 180°C so the energy for heating the plate will be: 880J (specific heat of aluminium) X 1Kg (weight of the heater) X 180°C - 25°C = 155°C (sealing temperature - ambient temperature) from which: 880 X 1 X 155 = 136,400 Joule, while the heating time of the plate will be: 136.4000J / 1000W of heating power = 136.4 seconds.

To seal the tray the following will instead be necessary:
1200J (mean specific heat cardboard + plastic) X 0.005 Kg (weight of the part to be heated) X 155°C (sealing temperature - ambient temperature) from which:

$$1200 \times 0.005 \times 155 = 930J$$

Calculating the percentage ratio between the energy used for sealing the tray and the total energy used for heating the plate plus the tray, we obtain: 930 /(136,400 + 930) X 100 = 0.68%, i.e. less than 1% of the energy used for heating the machine serves to seal the tray.

In the case of a machine that is always switched on, while waiting for work to carry out, and hypothesising that the energy dispersed in the environment will be equal to 1/10 of the maximum power, we obtain: 100 W X 12 hours of functioning = 1200W/h, which we will multiply by 3600 to transform it into Joules, from which 1200 X 3600 = 4,320,000J, to which we have to add the Joules for the initial heating: 4,320,000 + 136,400 = 4,456,400J. If we hypothesis sealing one tray per minute (typical rhythm of a supermarket counter) we will have 4,456,400J + (930J X 720) / 720 (1 piece per minute for 12 hours) = 7119J, and, as a percentage: 930 X 7119 X 100 = 13%. In this case too, though better than before, the unused energy is the main component in the total (87%).

Examples of prior art heating devices, which lightly improve the performance above summarized, are known from documents JP2002215246 and US2009045187.

The aim of the present invention is to provide a heating device that enables obviating the drawbacks of the currently available heaters, enabling a significant energy saving.

Further characteristics and advantages of the present invention will become more apparent in the following detailed description of an embodiment of the present invention, illustrated by way of non-limiting example in the attached figures, in which:

-   figure 1 is a schematic illustration of a first embodiment of the heating device according to the present invention;
-   figure 2 is a schematic illustration of a second embodiment of the heating device according to the present invention;
-   figures 3A, 3B, 4 and 5 illustrate further constructional variants of a heating device according to the present invention;
-   figure 6 is a time/temperature qualitative graph for the heating of the device according to the present invention;

- figure 7 illustrates an embodiment of the device, which includes recovering a working heat;
- figures 8A, 8B, 8C, 8D are conventional diagrams of the heating device according to the present invention, in an illustrated embodiment powered by a 230V electric grid with 2KW power and a heater operating at low voltage at about 40 Volt.

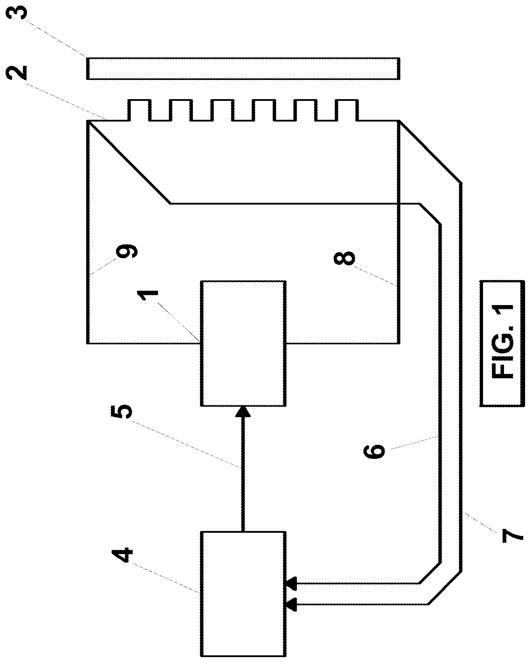

As illustrated in figure 1, the heating device according to the present invention comprises a power source 1, which in the present example can be a battery or a rectifier which provides a direct current in output.

The heating device further comprises a heater 2, which can be conformed so as to maintain the thermal mass very low. The heater 2 is made of a metal material an electrical resistance of which is variable according to a temperature, for example copper, brass, bronze, steel, aluminium. Electrical connections 8, 9 are predisposed for connecting the heater 2 to the power source 1. The heater 2 is therefore crossed by an electric current powered by the power source 1. The heater 2 can be placed in close contact with the element 3 to be heated, so as to effectively transfer the heating power.

A control module 4, by means of measuring connections 6, 7, detects the resistance of the heater 2, by calculating the ratio between the voltage present at the heater ends and the current flowing through the heater 2. The control module 4 utilises the resistance calculated as the reference value for controlling the temperature. By means of a connecting device 5, the control module 4 sends an adjustment signal to the power source 1, which varies the power sent to the heater 2 on the basis of instant-by-instant heating needs. The connecting device 5 is able to vary either the voltage of the power source 1 or to adjust the voltage over time using the PWM method or another known method.

While the traditional systems require a large thermal mass in order to contain the temperature leaps caused by the variation in the working conditions, the present invention utilises the heater 2 itself as the temperature sensor. This enables accurately monitoring the temperature of the heater 2 instant by instant and, since the heater 1 is placed in close thermal contact with the element to be heated 3, even the temperature of this element can be controlled very precisely.

Given the low thermal mass of the heater 1, it is further possible to make the control module 4 work with very frequent control cycles, in the order of thousands per second, while today's typical adjustment technologies operate in the order on one cycle per second. This is because the thermal mass of the heater is so high as to utilise tens of seconds or even minutes in order to reach the temperature, while, in the heating device according the present invention, the heater requires a heating time in the order of 0.1 - 0.2 seconds, which enables the control module to operate even at a rate of thousands of times per second.

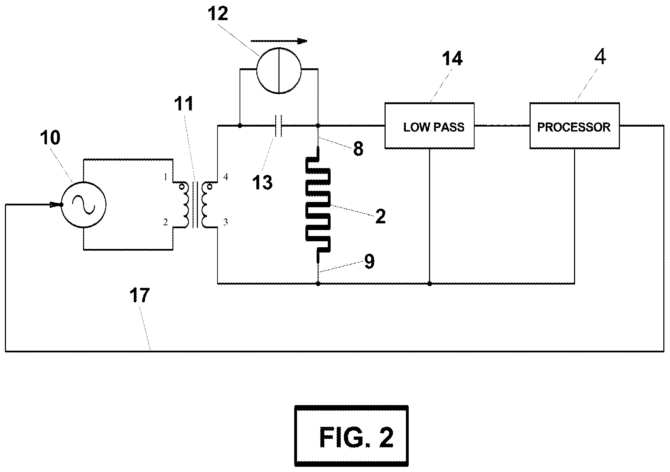

Figure 2 illustrates a second embodiment of the heating device, in which the power source 10 is at high frequency, for example a semiconductor inverter.

An inverter can work at ultrasonic frequencies, up to various hundreds of KHz. In these conditions the calculation of the resistance of the heater 2, performed as a ratio between the vector values of voltage and current, is rather complex. To avoid said complexity, the heating device comprises a current source 12, predisposed to supply a known current.

In particular, a capacitor 13 and the direct current source 12 are connected to the transformer output 11, connected to the primary of the power source 10. A low-pass filter 14 is also connected in parallel to the heater 2 and provides in output an adjustment signal, sent to the control module 4, in turn connected to the source 10, by a connection 17.

The heating device illustrated in figure 2 functions in the following way.

The power of the source 10 is transmitted to the heater 2 via the transformer 11 and the capacitor 13. The capacitor 13 is dimensioned so as to have a minimum resistance to passage of the alternating current by which it is crossed. The current source 12, connected in parallel to the capacitor 13, sends a known direct current to the heater 2, which is therefore crossed by the alternating current coming from the source 10 and by the known direct current coming from the source 12. There is therefore a voltage present at the ends 8, 9 of the heater 2, given by the product of the current crossing the heater 2 by the resistance thereof. The low-pass filter 14 removes the alternating component of the voltage and leaves only the direct current voltage generated by the known current coming from the source 12. As the resistance of the heater 2 is a function of the temperature, even the voltage extracted by the low-pass filter 14, will be a function of the temperature.

The power source 10 can also be constituted by the electric grid at 110 - 230V at 50 or 60 Hz. In this case the transformer and the other circuits will be dimensioned for said working frequency.

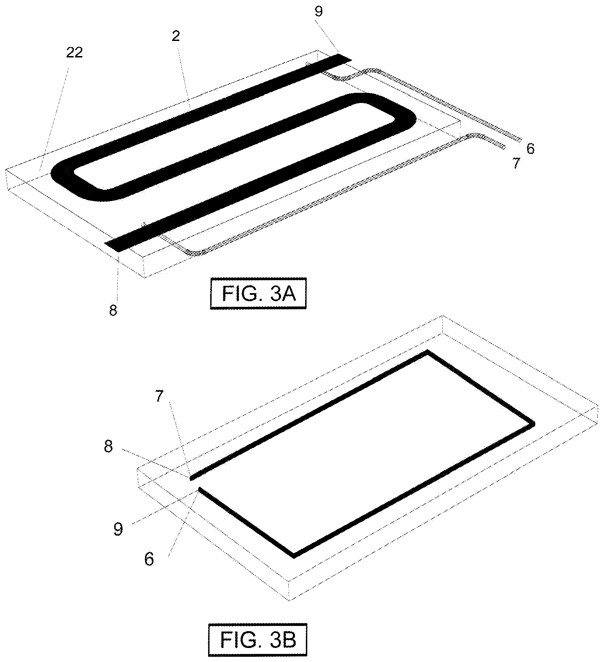

Figure 3A represents a planar embodiment of the heater 2. In particular, the heater 2 is deposited on a flat surface 22 of thermally and electrically insulating material. The electrical connections 8, 9 are predisposed to be connected to the power source 1, 10, while the measuring connections 6, 7 are predisposed for being connected to the control module 4. This configuration of the heater 2 is especially suitable for heating solid elements. For example, as illustrated in figure 3B, the heater 2 can be conformed for matching the shape of a tray to be sealed.

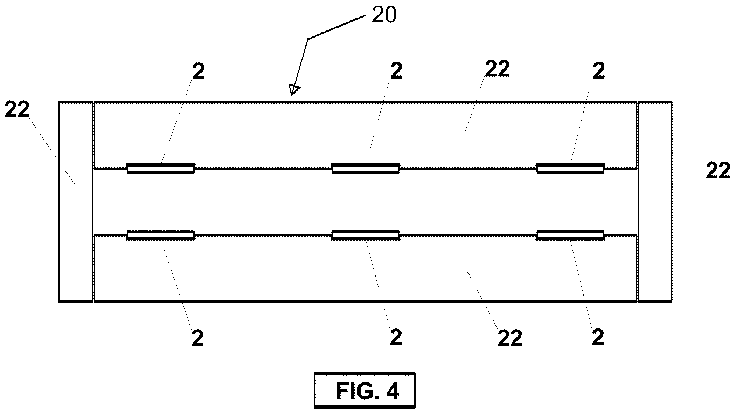

Figure 4 illustrates an embodiment of a heater unit 20 in which two or more heaters 2 are coupled to form a containing system of an object to be heated. The heaters 2 can be electrically connected in series or in parallel according to the power supply needs with a higher voltage in a case of elements in series and a lower voltage in a case of elements connected in parallel. The heater unit 20 is particularly suitable for heating liquids, vapors and gases.

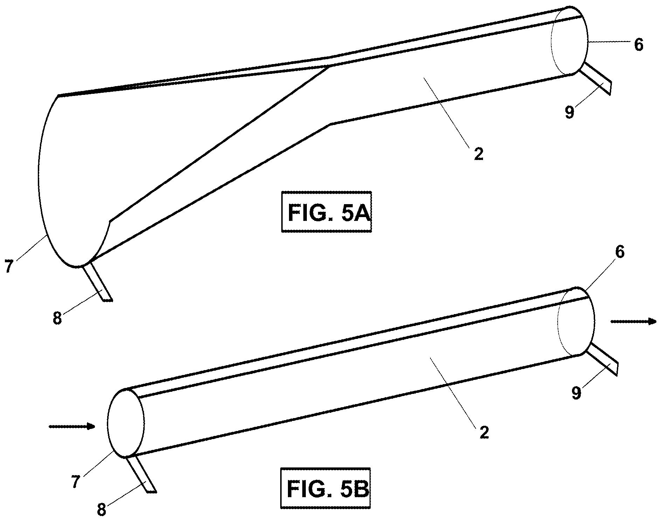

Figure 5 illustrates a heater 2 bent to form a tube able to convey liquids, gases and vapors. The measuring connections 6, 7 and the electrical connections 8, 9 are predisposed for the same connections as already described for the preceding embodiments.

The perfect thermal contact between the heater 2 and the element to be heated enables considerably increasing the efficiency of the heating device according to the present invention.

However, in the case of use for heat-welding of trays or fusion of other materials, undesired encrustations might be accumulated on the heater 2, for example glues, or lime scale or solid oil residues and so on. It is very important to be able to detect the presence of any accumulation or encrustation, before it becomes such as to make the system malfunction. By way of example, it is possible to establish a tolerable maximum drop in the heat transmission between the heater 2 and the object to be heated, for example a drop of 20%.

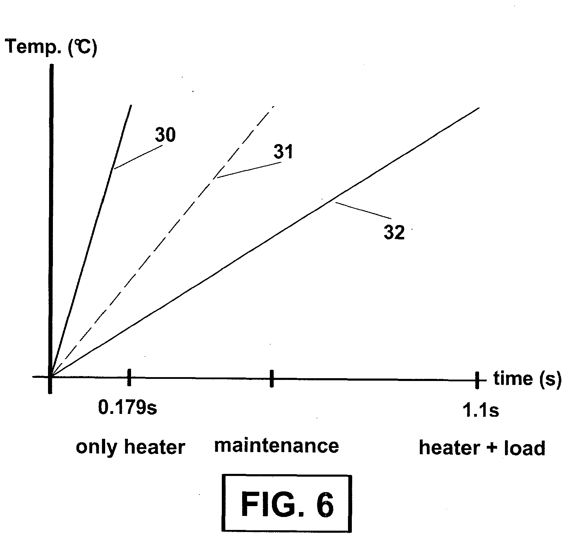

Thanks to the rapidity of the control module and the possibility of measuring the resistance of the heater, an indication of the state of cleanliness of the heater can be obtained. Figure 6 shows a qualitative graph of the heating time as a function of the temperature for the heater illustrated in figure 1, utilisable for sealing the trays for foods.

The time required for heating the clean heater 2 in air is about 0.18 seconds (curve "30"), while the time for the heating of the clean heater 2 in contact with the tray is 1.1 seconds (curve "32"), calculable as the total heat necessary divided by the power delivered by the source 1, 10., i.e.: 179 + 960 Joule / 1000W = 1.1 seconds.

When the heater 2 is dirty or encrusted, and the thermal contact with the tray is no longer perfect, the time it takes the heater to reach the temperature will be shorter (curve "31") with respect to the case in which the heater 2 is clean. By measuring the time required for reaching the desired temperature, it is therefore possible to obtain an index of the degree of cleanliness/encrustation of the heater. All of the above is also valid in regard to a case in which the heater 2 is predisposed for containing liquids, vapors or gases.

By taking account of the index of cleanliness/encrustation obtained, it is possible to compensate for the low thermal transfer of the heater to the element to be heated, by increasing the contact time between the heater 2 and the heating element 3, or by reducing the transit velocity of the fluid to be heated in the embodiment of figure 5A and 5B, or yet by increasing the working temperature of the heater 2.

In a case in which a fluid is heated, it is possible to calculate the quantity of material heated (flow rate) on the basis of the heat used in the heating. For example, if 1000 Joule are required for heating a gram of a certain material from ambient temperature to a desired temperature, by calculating the Joules effectively used, for example 10,000 Joule, it is possible to know the weight or volume of the heated material, in this example 10 grams.

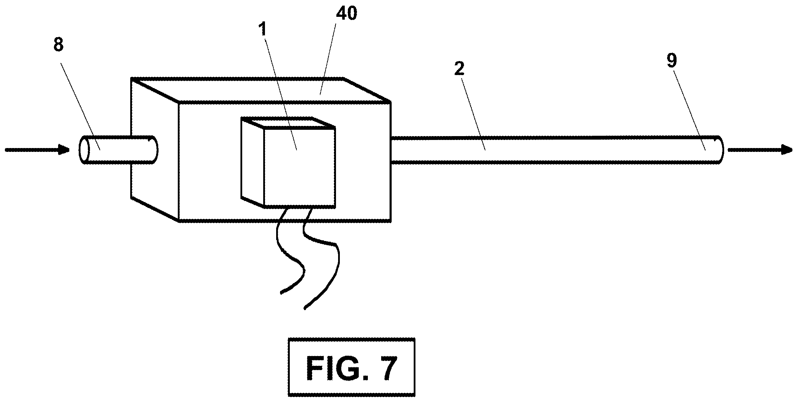

The working heat produced by the components utilised, and in particular the heat produced by the components of an electrical/electronic nature, can be used for heating a cooler zone of the heater 2. Figure 7 illustrates an example in which the heater 2, in the tubular shape, takes heat from a heat sink 40 of the electronic power parts of the source 1, which heat would otherwise be dispersed. The heat sink 40 does not substantially increase the thermal mass of the heater 2, as it is located at a cooler zone of the heater (2), for example the input section of the fluid to be heated.

The heater of the present invention enables obtaining notable advantages in comparison with heaters currently available on the market.

The heater according to the present invention in fact enables reducing the mass of the heating element to only three grams of copper or another metal suitable for passage of the electric current.

In this case the energy required for bringing the heating element to the correct temperature is given by: 385J (specific heat of copper) X 0.003Kg (weight of the heater) X 155°C (sealing temperature - ambient temperature) = 179 Joule. Considering the energy required for sealing the tray, mentioned in the foregoing, we will have the following percentage:

$$930J / (179J + 930J) \; X100 = 83.8\%$$

The heating time will not be 136 seconds as before, but 179J / 1000W = 0.179 sec.

The practically instantaneous heating thus enables keeping the heater switched off during the down times or when the heater is not in use, and to switch the heater on only at the moment of use. The energy saving is therefore effective in any working condition both for a single sealing operation and for continuous use. In this second case the efficiency passes from the 15% of the prior art to 83.8%, with the use of the invention.

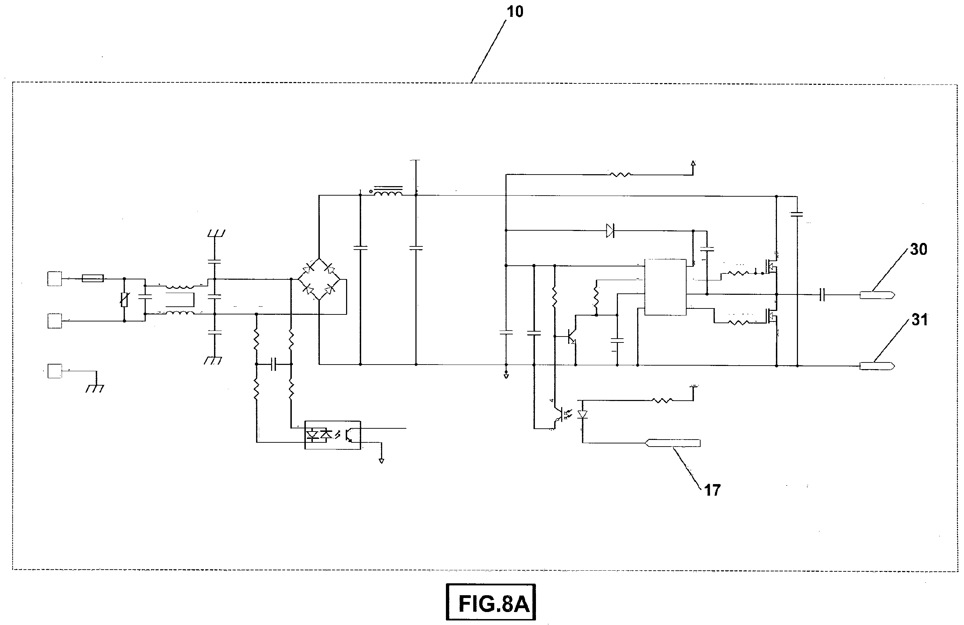

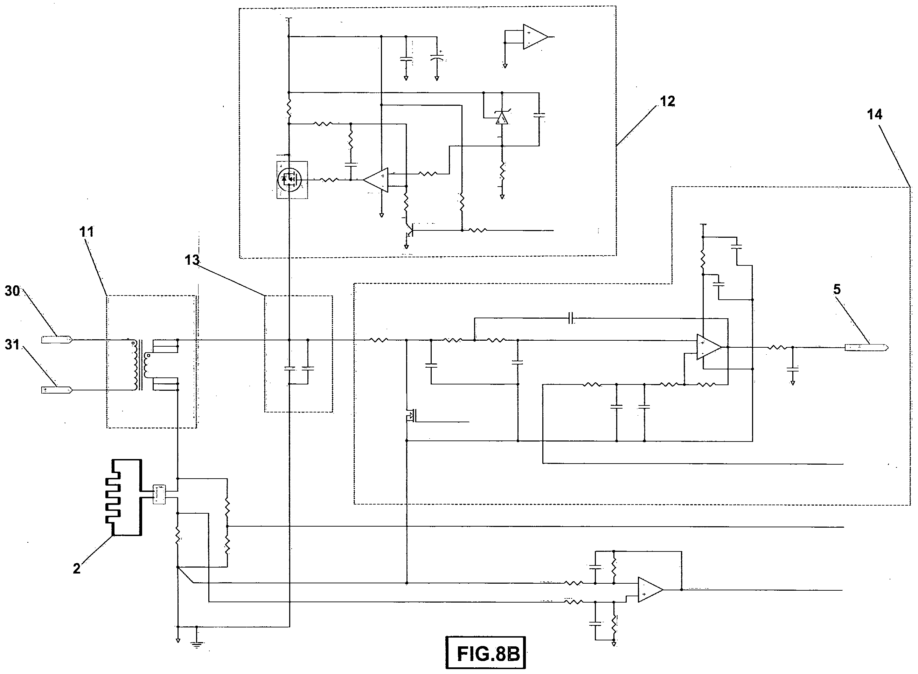

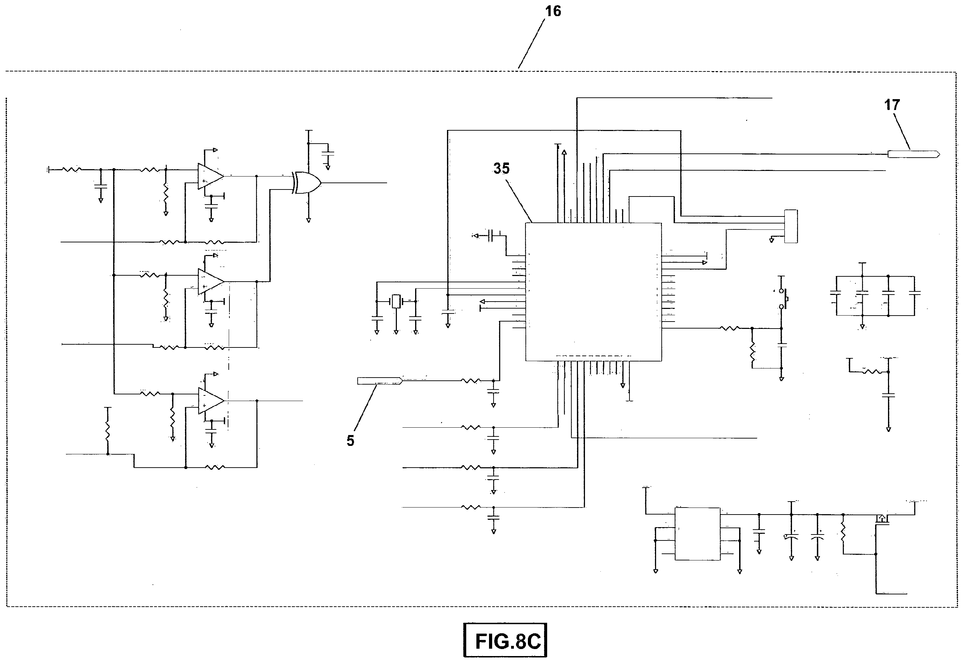

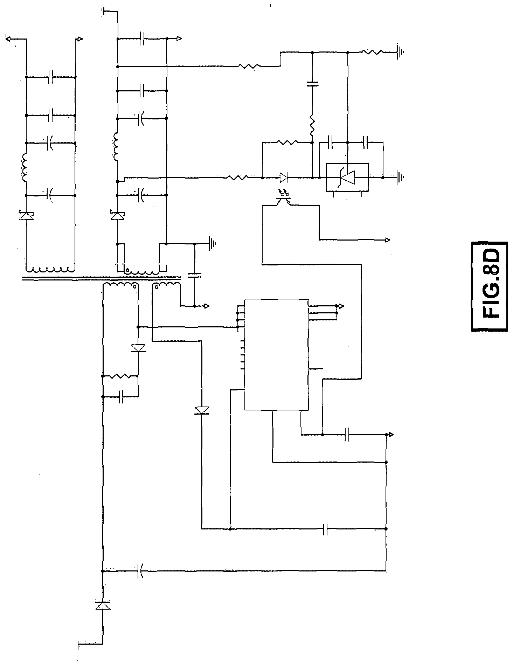

The illustrated embodiment is alike the construction type of figure 2 and is illustrated in detail in figures 8A, 8B, 8C and 8D. In particular, in figure 8A the power source 10 is described, constructed with a mosfet inverter, piloted by an IRS2153D driver and controlled by the photo-coupler connected to the control connection 17. Noise filters and filter capacitors are inserted on the power input coming from the single-phase 230Volt network to eliminate the electrical noise produced by the inverter. The power is sent to the transformer 11, shown in figure 8B, via the two connections 30 and 31, to the output of the inverter, composed of the two IPP65R045C7 mosfets. The other functional blocks, like the known current source 12 and the low pass filter 14, perform the functions already described previously. In this example the capacitor 13 is composed of a plurality of elements in parallel. The output 5 of the low pass filter 14 leads to the controller 35 of block 16 of figure 8C. The other control circuits present carry out auxiliary functions of protection and are not essential to the description of the invention. Figure 8D illustrates the auxiliary power source, able to provide the various voltages required for the correct functioning of the heating system.

**Claims**

1. A heating device, comprising: a heater (2) made of a material an electrical resistance of which is variable according to a temperature; a power source (1,10) in alternating current, connected to the heater (2) by means of electrical connections (8,9) for sending an electric current which flows through the heater (2); a control module (4) predisposed for adjusting the current supplied by the power source (1); measuring connections (6,7) located at the ends of the heater (2) and connected to the control module (4), which control module (4) is predisposed for measuring the resistance of the heater (2) by calculating a ratio between the voltage present at the ends of the heater (2) and the current flowing through the heater (2), which are detected by means of the measuring connections (6,7);
**characterized in that** it comprises:

a direct current source (12), predisposed for supplying a predetermined current;
a capacitor (13), connected in parallel to the direct current source (12); the capacitor (13) and the source of direct current are interposed between the power source (10) and the heater (2);
a low-pass filter (14) located in parallel to the heater (2) and connected to the control module (4).

2. The heating device according to claim 1, wherein the control module (4) adjusts the power supplied by the power source (1) on the basis of the resistance measured for the heater (2).

3. The heating device according to claim 2, comprising: a connecting device (5), which is interposed between the control module (4) and the power source (1) and which is suitable for varying a voltage of the power source (1) or for adjusting the voltage over time, by means of a PWM method or an equivalent method.

4. The heating device according to claim 1, wherein the control module (4) is predisposed for measuring the temperature of the heater (2) by detecting the direct current voltage at the output of the low-pass filter (14).

5. The heating device according to one of the preceding claims, wherein the heater (2) is deposited in a predetermined configuration on a flat surface (22) of a thermally and electrically insulating material.

6. The heating device according to one of the preceding claims, comprising a heater unit (20) which comprises two or more heaters (2) that are connected together in series or in parallel.

7. The heating device according to one of the preceding claims, wherein the control module (4) is predisposed for: detecting a time required for reaching a determined temperature of the heater (2); comparing the detected time with a reference time; in the event that the detected time is shorter than the reference time, the control module (4) increases the power supplied by the power source (1,10) and/or increases the contact time between the heater (2) and the object to be heated.

8. The heating device according to one of the preceding claims, wherein the control module (4) has, stored in a memory thereof, a specific heat of one or more materials or substances to be heated and is predisposed for calculating a mass of material or substance heated by the heater (2) as a ratio between the total heat supplied and the specific heat of the material or substance.

9. The heating device according to claim 1, wherein the heater (2) has a tubular conformation; and is placed in contact with a heat sink (40) of the electronic parts of the power source (1), in a low temperature zone or an inlet zone of a fluid to be heated.

**Patentansprüche**

1. Heizvorrichtung, umfassend: einen Erhitzer (2) aus einem Material, dessen elektrischer Widerstand nach einer Temperatur veränderbar ist; eine Wechselstromquelle (1, 10), die mit dem Erhitzer (2) über elektrische Anschlüsse (8, 9) verbunden ist, um einen elektrischen Strom zu senden, der durch den Erhitzer (2) fließt; ein Steuermodul (4), das zum Einstellen des von der Stromquelle (1) zugeführten Stroms vorgesehen ist; Messanschlüsse (6, 7), die an den Enden des Erhitzers (2) angeordnet und an das Steuermodul (4) angeschlossen sind, wobei das Steuermodul (4) zum Messen des Widerstands des Erhitzers (2) durch Berechnen eines Verhältnisses zwischen der an den Enden des Erhitzers (2) anliegenden Spannung und dem durch den Erhitzer (2) fließenden Strom vorgesehen ist, die mittels der Messanschlüsse (6,7) erfasst werden;
**dadurch gekennzeichnet, dass** sie umfasst:

eine Gleichstromquelle (12), die zum Liefern eines vorbestimmten Stroms vorgesehen ist; einen Kondensator (13), der parallel zur Gleichstromquelle (12) geschaltet ist; der Kondensator (13) und die Gleichstromquelle sind zwischen der Stromquelle (10) und dem Erhitzer (2) angeordnet; ein Tiefpassfilter (14), das parallel zu dem Erhitzer (2) angeordnet und mit dem Steuermodul (4) verbunden ist.

2. Heizvorrichtung nach Anspruch 1, wobei das Steuermodul (4) die von der Stromquelle (1) zugeführte Leistung auf der Grundlage des für den Erhitzer (2) gemessenen Widerstands einstellt.

3. Heizvorrichtung nach Anspruch 2, umfassend: eine Anschlussvorrichtung (5), die zwischen dem Steuermodul (4) und der Stromquelle (1) angeordnet ist und die zum Verändern einer Spannung der Stromquelle (1) oder zum Einstellen der Spannung über die Zeit mittels eines PWM-Verfahrens oder eines gleichwertigen Verfahrens geeignet ist.

4. Heizvorrichtung nach Anspruch 1, **dadurch gekennzeichnet, dass** das Steuermodul (4) zum Messen der Temperatur des Erhitzers (2) durch Erfassen der Gleichspannung am Ausgang des Tiefpassfilters (14) vorgesehen ist.

5. Heizvorrichtung nach einem der vorhergehenden Ansprüche, wobei der Erhitzer (2) in einer vorbestimmten Konfiguration auf einer ebenen Oberfläche (22) aus einem thermisch und elektrisch isolierenden Material abgelagert ist.

6. Heizvorrichtung nach einem der vorhergehenden Ansprüche, umfassend eine Heizeinheit (20), die zwei oder mehrere Erhitzer (2) umfasst, die in Reihe oder parallel miteinander geschaltet sind.

7. Heizvorrichtung nach einem der vorhergehenden Ansprüche, wobei das Steuermodul (4) dazu vorgesehen ist: Erfassen einer Zeit, die zum Erreichen einer bestimmten Temperatur des Erhitzers (2) erforderlich ist; Vergleichen der erfassten Zeit mit einer Referenzzeit; für den Fall, dass die erfasste Zeit kürzer als die Referenzzeit ist, erhöht das Steuermodul (4) die von der Stromquelle (1,10) zugeführte Leistung und/oder erhöht die Kontaktzeit zwischen dem Erhitzer (2) und dem zu erhitzenden Gegenstand.

8. Heizvorrichtung nach einem der vorhergehenden Ansprüche, wobei das Steuermodul (4), in einem Speicher davon gespeichert, eine bestimmte Hitze eines oder mehrerer zu erhitzenden Materialien oder Substanzen aufweist und zur Berechnung einer Masse von Material oder Substanz, der/die durch den Erhitzer (2) erhitzt werden, als Verhältnis zwischen der insgesamt zugeführten Hitze und der spezifischen Hitze des Materials oder Substanz vorgesehen ist.

9. Heizvorrichtung nach Anspruch 1, wobei der Erhitzer (2) eine rohrförmige Ausbildung aufweist; und mit einer Hitzesenke (40) der elektronischen Teile der Stromquelle (1) und zwar in einer Niedrigtemperaturzone oder einer Einlasszone eines zu erhitzenden Fluids in Kontakt gebracht wird.

## Revendications

1. Dispositif de chauffage, comprenant : un appareil de chauffage (2) constitué d'un matériau dont la résistance électrique est variable selon une température ; une source d'alimentation (1, 10) en courant alternatif, reliée à l'appareil de chauffage (2) au moyen de branchements électriques (8, 9) pour envoyer un courant électrique qui s'écoule à travers l'appareil de chauffage (2) ; un module de contrôle (4) prédisposé pour régler le courant fourni par la source d'alimentation (1) ; des raccordements de mesure (6, 7) situés aux extrémités de l'appareil de chauffage (2) et raccordés au module de contrôle (4), ledit module de contrôle (4) est prédisposé pour mesurer la résistance de l'appareil de chauffage (2) en calculant un rapport entre la tension présente aux extrémités de l'appareil de chauffage (2) et le courant s'écoulant à travers l'appareil de chauffage (2), étant détectés au moyen des raccordements de mesure (6, 7) ; **caractérisé en ce qu'**il comprend :

   une source (12) de courant continu prédisposée pour alimenter un courant prédéterminé ; un condensateur (13) relié en parallèle à la source (12) de courant continu ; le condensateur (13) et la source de courant continu sont interposés entre la source d'alimentation (10) et l'appareil de chauffage (2) ; un filtre passe-bas (14) situé en parallèle par rapport à l'appareil de chauffage (2) et relié au module de contrôle (4).

2. Dispositif de chauffage selon la revendication 1, dans lequel le module de contrôle (4) règle la puissance fournie par la source d'alimentation (1) sur la base de la résistance mesurée pour l'appareil de chauffage (2).

3. Dispositif de chauffage selon la revendication 2, comprenant : un dispositif de raccordement (5) étant interposé entre le module de contrôle (4) et la source d'alimentation (1) et étant adapté pour varier une tension de la source d'alimentation (1) ou pour régler la tension sur la durée au moyen d'un procédé de modulation d'impulsions en durée ou d'un procédé équivalent.

**4.** Dispositif de chauffage selon la revendication 1, dans lequel le module de contrôle (4) est prédisposé pour mesurer la température de l'appareil de chauffage (2) en détectant la tension de courant continu à la sortie du filtre passe-bas (14).

**5.** Dispositif de chauffage selon l'une des revendications précédentes, dans lequel l'appareil de chauffage (2) est déposé dans une configuration prédéterminée sur une surface plate (22) d'un matériau thermiquement et électriquement isolant.

**6.** Dispositif de chauffage selon l'une des revendications précédentes, comprenant une unité de chauffage (20) comprenant deux ou plusieurs appareils de chauffage (2) étant reliés en série ou en parallèle.

**7.** Dispositif de chauffage selon l'une des revendications précédentes, dans lequel le module de contrôle (4) est prédisposé pour : détecter une durée nécessaire pour atteindre une température déterminée de l'appareil de chauffage (2) ; comparer la durée détectée à une durée de référence ; si la durée détectée est plus courte que la durée de référence, le module de contrôle (4) augmente la puissance fournie par la source d'alimentation (1, 10) et/ou augmente la durée de contact entre l'appareil de chauffage (2) et l'objet à chauffer.

**8.** Dispositif de chauffage selon l'une des revendications précédentes, dans lequel le module de contrôle (4) comporte, stockée dans sa mémoire, une chaleur spécifique d'un ou plusieurs matériaux ou substances à chauffer et est prédisposé pour calculer une masse de matériau ou substance chauffée par l'appareil de chauffage (2) comme un rapport entre la chaleur totale fournie et la chaleur spécifique du matériau ou de la substance.

**9.** Dispositif de chauffage selon la revendication 1, dans lequel l'appareil de chauffage (2) a une forme tubulaire et est placé en contact avec un dissipateur thermique (40) des pièces électroniques de la source d'alimentation (1), dans une zone à basse température ou une zone d'entrée d'un fluide à chauffer.

FIG. 1

FIG. 2

FIG. 3A

FIG. 3B

FIG. 4

FIG. 5A

FIG. 5B

EP 3 443 809 B1

**FIG. 6**

Temp. (°C) — time (s) — 1.1s — 0.179s — only heater — maintenance — heater + load — 30 — 31 — 32

**FIG. 7**

FIG.8A

FIG.8B

FIG.8C

FIG.8D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002215246 B
- US 2009045187 A